# EUROPEAN PATENT APPLICATION

(11) **EP 4 477 066 A1**
(43) Date of publication of application: **18.12.2024**
(21) Application number: 24179258.9
(22) Date of filing: 31.05.2024
(51) Int. Cl.: A01G 20/47, E01H 1/08

(54) **PORTABLE BLOWER AND BLOWER ACCESSORY FOR PORTABLE BLOWERS**

(30) Priority: 15.06.2023 IT 202300012351
(71) Applicant: Stiga S.p.A. in breve anche St. S.p.A., 31033 Castelfranco Veneto (TV) (IT)
(72) Inventor: CAMERON, James, 31030 Casier (TV) (IT); TOLOTTO, Daniele, 31040 Chiarano (TV) (IT); PANDIN, Enrico, 31020 Villorba (TV) (IT); GATTO, Carla, 31033 Castelfranco Veneto (TV) (IT)
(74) Representative: PGA S.p.A.

(57) **Abstract**

Portable blower (1) comprising: a structure (2), at least partially hollow, defining at least one conduit (3) for the passage of an air flow between a suction zone (4) and a blowing end (5) at which at least one blowing opening (10) is provided; a flow generator device operatively arranged inside the structure (2) and switchable between a non-operating condition, in which no air flow is generated along the conduit (3) of the structure (2) and an operating condition, in which an air flow is generated along the conduit (3) between the suction zone (4) and the blowing end (5), towards the blowing opening (10); and, a scraping accessory (6) engaged with the structure (2) and configured to come into contact with one or more bodies present on a surface of a work or use area of the portable blower (1) to move or detach such bodies from the surface and allow, in the operating condition of the flow generator device of the blower portable (1), to the air flow generated thereby, to blow and push such bodies along the relative surface.

## Description

### Technical field

The present invention relates to a portable blower of the type usable in outdoor areas, such as roads, gardens, parks and/or the like, for blowing and pushing leaves, small debris, garbage and the like.

The present invention also relates to a blowing accessory for a portable blower of the type usable in outdoor areas, such as roads, gardens, parks and the like, for blowing and pushing leaves, small debris, garbage and the like.

Another object of the present invention is the use of a scraping accessory in combination with a structure of a portable blower and/or in combination with a blowing accessory for a portable blower and configured to come into contact with one or more bodies present on a surface of a work or use area of a respective portable blower to move or detach such bodies from the surface and allow at least one output air flow generated by the portable blower to push such bodies to the surface by blowing.

### Prior art

Several portable blowers are known which can be used in outdoor areas, such as roads, gardens, parks and/or the like, for blowing and pushing leaves, more or less small debris, garbage and the like.

Generally, the known portable blowers comprise a casing or hollow main body inside which a conduit is defined for the transit of an air flow between a suction zone and a blowing end. The casing can vary in shape and size depending on the model and type of portable blower considered. The casing of portable blowers generally has a substantially tubular structure which can be made in a single piece or defined by two or more portions appropriately connected to each other. The air transit conduit extends along the tubular structure to end with a blowing opening which, during use, is maintained by the user, oriented towards the area of the ground, the soil or the road on which it is desired to act by means of blowing.

Some portable blowers can be provided with support wheels applied near the blowing opening or at the blowing end of the tubular structure. During the use of these portable blowers, the support wheels prevent the respective blowing ends from dragging on the ground or asphalt, thus acting as a sliding trolley.

In other types of portable blowers, several protrusions can be provided at the blowing ends, which are mainly intended to ensure a certain position of the blowers if stored horizontally or to allow them to be hung along raised positions.

Although the known portable blowers allow the production of air flows capable of effectively pushing leaves, debris, garbage and the like, present on the ground, soil or/and roads, the Applicant has found that such blowers can be improved in several aspects, mainly in relation to the removal of leaves, debris, garbage or any body which remains attached or firmly bonded to the ground or to the asphalt which are not directly pushed by the air flow produced.

### Object of the invention

The main object of the present invention is to resolve one or more of the problems detected in the prior art.

It is an object of the present invention to propose a portable blower of the type usable in outdoor areas, such as roads, gardens, parks and/or the like, for blowing and pushing leaves, small debris, garbage and the like which allows to effectively remove from the ground, soil and/or roads the deposits of leaves, debris and/or garbage which over time have attached or firmly bonded, creating voluminous aggregates.

It is further an object of the present invention to propose a blowing accessory for a portable blower of the type usable in outdoor areas, such as roads, gardens, parks and the like, for blowing and pushing leaves, small debris, garbage and the like which is capable of allowing the portable blower to effectively remove from the ground, soil and/or roads the deposits of leaves, debris and/or garbage which over time have attached and/or firmly bonded, creating voluminous aggregates.

It is also an object of the present invention to propose the use of a scraping accessory in combination with a structure of a portable blower and/or in combination with a blowing accessory for a portable blower and configured to come into contact with one or more bodies present on a surface of a work or use area of a respective portable blower to move or detach such bodies from the surface and allow at least one output air flow generated by a respective portable blower to push such bodies to the surface by blowing.

These objects and still others, which will appear more fully from the following disclosure, are substantially achieved by a portable blower, a blowing accessory for portable blowers and the use of a scraping accessory, in accordance with what is expressed in one or more of the appended claims and/or the following aspects, taken alone or in combination with each other.

### Summary of the invention

The aspects of the invention are disclosed herein.

In a 1st independent aspect of the present invention, a portable blower (1) is provided comprising:
- a structure (2), at least partially hollow, defining at least one conduit (3) for the transit of an air flow between a suction zone (4) and a blowing end (5) at which at least one blowing opening (10) is provided;
- a flow generator device operatively arranged inside the structure (2) and switchable between a non-operating condition, in which no airflow is generated along the conduit (3) of the structure (2) and an operating condition, in which an air flow is generated along the conduit (3) between the suction zone (4) and the blowing end (5), towards the blowing opening (10);
- a scraping accessory (6) engaged with the structure (2) and configured to come into contact with one or more bodies present on a surface of a work or use area of the portable blower (1) to move or detach such bodies from the surface and allow, in the operating condition of the flow generator device of the portable blower (1), the air flow generated thereby, to blow and push such bodies along the relative surface.

In a further independent aspect 1-bis, combinable with the preceding aspect and with any of the following aspects, a blowing accessory (7) for a portable blower (1) is provided, in which the blowing accessory (7) is at least partially hollow and is configured to removably engage a blowing end (5) of a conduit (3) of a structure (2) of the portable blower (1) so as to give continuity to the conduit (3) of the structure (2) of the portable blower (1), the blowing accessory (7) comprising:
- an engagement portion (8) engageable to the blowing end (5) of the structure (2) to put the blowing accessory (7) in fluid communication with the conduit (3) of the structure (2);
- a blowing portion (9), arranged on the side opposite the engagement portion (8), in fluid communication with the latter, provided with a blowing opening (10) for the output of an air flow;
- a scraping accessory (6) engaged to the structure (2) and configured to come into contact with one or more bodies present on a surface of a work or use area to move or detach such bodies from the surface and allow, in the operating condition of the flow generator device of the portable blower (1), the output air flow, to push such bodies on the surface by blowing.

In another independent aspect 1-ter, combinable with any one of the preceding aspects and with any one of the following aspects, a portable blower/aspirator(1) is provided comprising:
- a structure (2), at least partially hollow, defining at least one conduit (3) for the transit of an air flow;
- a flow generator device operatively arranged inside the structure (2) and switchable between a non-operating condition, in which no airflow is generated along the conduit (3) of the structure (2) and an operating condition, in which an air flow is generated along the conduit (3);
- a scraping accessory (6) engaged with the structure (2) and configured to come into contact with one or more bodies present on a surface of a work or use area of the portable blower/aspirator (1) to move or detach such bodies from the surface and allow, in the operating condition of the flow generator device of the portable blower (1), the air flow generated thereby, along the conduit (3), to:
   ∘ blow and push, through a corresponding blowing/suction opening (10) defined in the structure (2), such bodies along the relative surface of the work and use area of the portable blower (1); or to
   ∘ suction inside the conduit (3), through the same blowing/suction opening (10), the bodies present on the surface of the work and use area of the portable blower (1).

In another independent aspect 1-quater, combinable with any of the preceding aspects and with any of the following aspects, the use of a scraping accessory (6) is provided in combination with a structure (2) of a portable blower (1) and/or in combination with a blowing accessory (7) for a portable blower (1) and configured to come into contact with one or more bodies present on a surface of a work or use area of a respective portable blower (1) to move or detach such bodies from the surface and allow at least one output air flow generated by a respective portable blower (1) to push such bodies on the surface by blowing.

In the following aspects, structural and functional technical details regarding the portable blower (1) and the blowing accessory (7) are added. Every single aspect related to the portable blower (1) is also clearly combinable with any aspect related to the blowing accessory (7) and vice versa. Each following aspect related to the portable blower (1) or the blowing accessory (7) can also be considered separately or in combination with each other.

In a 2nd aspect in accordance with any one of the preceding aspects, the scraping accessory (6) is externally engaged to the structure (2) of the portable blower (1).

In a 3rd aspect in accordance with any one of the preceding aspects, the scraping accessory (6) is externally engaged to the structure (2) of the portable blower (1) at the blowing end (5) of the latter.

In a 4th aspect in accordance with any one of the preceding aspects, the scraping accessory (6) is externally engaged to the structure (2) of the portable blower (1) near the blowing opening (10).

In a 5th aspect in accordance with any one of the preceding aspects, the scraping accessory (6) has at least one scraping edge (6a) arranged according to a protruding and/or advanced position with respect to the blowing end (5) of the structure (2) of the portable blower (1) along a longitudinal extension axis (X) of the structure (2) and/or of the conduit (3) in the advancement direction of the air flow generated by the flow generator device from the suction zone (4) to the blowing end (5).

In a 6th aspect in accordance with any one of the preceding aspects, the scraping accessory (6) has at least one scraping edge (6a) arranged according to a protruding and/or advanced position with respect to the blowing opening (10) of the structure (2) of the portable blower (1) along a longitudinal extension axis (X) of the structure (2) and/or of the conduit (3) of the latter in the advancement direction of the air flow generated by the flow generator device from the suction zone (4) to the blowing end (5).

In a 7th aspect in accordance with any one of the two preceding aspects, the scraping edge (6a) of the scraping accessory (6) extends transversely with respect to the longitudinal extension axis (X) of the structure (2) and/or of the conduit (3) of the latter.

In an 8th aspect in accordance with any one of the three preceding aspects, the scraping edge (6a) of the scraping accessory (6) extends substantially perpendicularly with respect to the longitudinal extension axis (X) of the structure (2) and/or of the conduit (3) of the latter.

In a 9th aspect in accordance with any one of the four preceding aspects, the scraping edge (6a) of the scraping accessory (6) is defined on at least one scraping plate (11) externally engaged to the structure (2) of the portable blower (1).

In a 10th aspect in accordance with the preceding aspect, the scraping plate (11) defining the scraping edge (6a) of the scraping accessory (6) lies in a spaced position with respect to the structure (2) of the portable blower (1).

In an 11th aspect in accordance with any one of the two preceding aspects, the scraping plate (11) defining the scraping edge (6a) of the scraping accessory (6) and the structure (2) of the portable blower (1) define at least an intermediate space (12) for the passage of one or more scraped bodies from a surface of the work or use area of the portable blower (1).

In a 12th aspect in accordance with any one of the three preceding aspects, the scraping plate (11) defining the scraping edge (6a) of the scraping accessory (6) has at least one working portion (11a) extending according to an inclined plane with respect to a reference plane perpendicular to the longitudinal extension axis (X) of the structure (2) and/or of the conduit (3) of the latter, the scraping edge (6a) being defined on the edge of the working portion (11a) of the scraping plate (11) farthest from the structure (2) of the portable blower (1) or from the blowing opening (10) of the latter.

In a 13th aspect in accordance with the preceding aspect, the scraping plate (11) defining the scraping edge (6a) of the scraping accessory (6) has a collection and/or unloading portion (11b) extending from the working portion (11a), on the opposite side with respect to the scraping edge (6a), according to a transverse or inclined extension plane.

In a 14th aspect in accordance with any one of the two preceding aspects, the scraping plate (11) defining the scraping edge (6a) of the scraping accessory (6) has at least one groove (11c) for collecting and/or unloading the scraped bodies from the surface of the work and/or use area of the portable blower (1).

In a 15th aspect in accordance with any one of the three preceding aspects, the scraping plate (11) defining the scraping edge (6a) of the scraping accessory (6) has a plurality of grooves (11c) for collecting and/or unloading the scraped bodies from the surface of the work and/or use area of the portable blower (1).

In a 16th aspect in accordance with the preceding aspect, the grooves (11c) for collecting and/or unloading the scraped bodies from the surface of the work and/or use area of the portable blower (1) extend substantially parallel to each other.

In a 17th aspect in accordance with any one of the two preceding aspects, the grooves (11c) for collecting and/or unloading the bodies scraped from the surface of the work and/or use area of the portable blower (1) extend substantially parallel to the longitudinal extension axis (X) of the structure (2) and/or of the conduit (3) of the latter.

In an 18th aspect in accordance with any one of the four preceding aspects, the grooves (11c) of the plurality of grooves (11c) for collecting and/or unloading the scraped bodies from the surface of the work and/or use area of the portable blower (1) are obtained and/or made at least on the working portion (11a) of the scraping plate (11).

In a 19th aspect in accordance with any one of the preceding aspects, the scraping accessory (6) has at least one supporting and connecting element (13) to the structure (2) of the portable blower (1).

In a 20th aspect in accordance with the preceding aspect, the supporting and connecting element (13) extends transversely with respect to the structure (2) of the portable blower (1).

In a 21 st aspect in accordance with any one of the two preceding aspects when dependent on any of the aspects from the 9th to the 18th, the supporting and connecting element (13) extends transversely to the scraping plate (11) of the scraping accessory (6).

In a 22nd aspect in accordance with any one of the three preceding aspects when dependent on any one of the aspects from the 9th to the 18th, the support element (13) is joined in a single piece with the scraping plate (11) of the scraping accessory (6).

In a 23rd aspect in accordance with any one of the four preceding aspects, when dependent on any one of the aspects from the 13th to the 18th, the supporting element (13) is joined in a single piece with the collection and/or unloading portion (11b) of the scraping plate (11) of the scraping accessory (6).

In a 24th aspect in accordance with any one of the aspects from the 1st to the 18th, the scraping accessory (6) has at least two supporting and connecting elements (13) to the structure (2) of the portable blower (1).

In a 25th aspect in accordance with the preceding aspect, each supporting element (13) extends transversely with respect to the structure (2) of the portable blower (1).

In a 26th aspect in accordance with any one of the two preceding aspects when dependent on any one of the aspects from the 9th to the 18th, each supporting element (13) extends transversely with respect to the scraping plate (11) of the scraping accessory (6) of the portable blower (1).

In a 27th aspect in accordance with any one of the three preceding aspects when dependent on any one of the aspects from the 9th to the 18th, each supporting element (13) is joined in a single piece with the scraping plate (11) of the scraping accessory (6) of the portable blower (1).

In a 28th aspect in accordance with any one of the four preceding aspects when dependent on any one of the aspects from the 9th to the 18th, the scraping plate (11) of the scraping accessory (6) of the portable blower (1) is interposed between the supporting elements (13) of said scraping accessory (6).

In a 29th aspect in accordance with any one of the five preceding aspects when dependent on any one of the aspects from the 13th to the 18th, each supporting element (13) is joined in a single piece with the collection and/or unloading portion (11b) of the scraping plate (11) of the scraping accessory (6) of the portable blower (1).

In a 30th aspect in accordance with any one of the six preceding aspects when dependent on any one of the aspects from the 13th to the 18th, the collection and/or unloading portion (11b) of the scraping plate (11) of the scraping accessory (6) of the portable blower (1) is interposed between the supporting elements (13) of said scraping accessory (6).

In a 31st aspect in accordance with any one of the preceding aspects, the scraping accessory (6) of the portable blower (1) is removably engaged to the structure (2) of the latter.

In a 32nd aspect in accordance with any one of the preceding aspects, the scraping accessory (6) comprises a first and a second supporting and connecting element (13) emerging away from opposite parts of a wall defining the blowing opening (10) and joined to the scraping plate (11) at opposite ends thereof so as to define a substantially "U"-shaped transverse section of the accessory.

In a 32nd-bis aspect in accordance with the preceding aspect, a portion of the wall defining the blowing opening (10) is comprised between the first and the second supporting and connecting element (13) is facing and spaced from the scraping plate (11), defining an intermediate space (12) acting as a passage channel for the scraped bodies, in particular the scraping plate (11) being substantially flat with a front tapered attachment edge and/or the portion of the wall defining the blowing opening (10) being curved, and more in particular extending according to an arc of circumference.

In a 32nd-ter aspect in accordance with the preceding aspect, the intermediate space (12) is open frontally and preferably also posteriorly.

In a 32nd-quater aspect in accordance with any one of the preceding aspects 32 - 32-ter, the first and second supporting and connecting elements (13) are substantially converging towards each other to define a reduced lateral overall dimension or equal to the lateral overall dimension of the blowing opening (10).

In a 33rd aspect in accordance with any one of the five preceding aspects, the scraping accessory (6) of the portable blower (1) removably engages the structure (2) of the latter by means of at least one coupling and uncoupling member, optionally by means of a bushing or a shankfittable on the structure (2) of the portable blower (1) along the longitudinal extension axis (X) of the structure (2), in particular on the blowing end (5) of the structure (2) of the portable blower (1). In a 34th aspect in accordance with any one of the aspects from the 19th to the 23rd, the supporting and connecting element (13) is joined in a single piece with the structure (2) of the portable blower (1).

In a 35th aspect in accordance with any one of the aspects from the 24th to the 30th, each supporting and connecting element (13) is joined in a single piece with the structure (2) of the portable blower (1).

In a 36th aspect in accordance with any one of the preceding aspects, the scraping edge (6a) of the scraping accessory (6) of the portable blower (1) is made of a material resistant to wear from dragging and/or friction, optionally it is made of Polyamide (PA) or Polyoxymethylene (POM), in particular reinforced with glass fibres.

In a 37th aspect in accordance with any one of the preceding aspects, the scraping edge (6a) of the scraping accessory (6) of the portable blower (1) is removable to be replaced with a scraping edge (6a) of different shape and/or material or with a new scraping edge (6a) of the same shape and/or in the same material.

In a 38th aspect in accordance with any one of the aspects from the 12th to the 37th, the working portion (11a) of the scraping plate (11) of the scraping accessory (6) is removable to be replaced with a working portion (11a) of different shape and/or material or with a new working portion (1 1a) of the same shape and/or material.

In a 38th-bis aspect in accordance with any one of the preceding aspects, the portable blower (1) comprises at least one handle portion (2a) arranged on the structure (2) for manual engagement by a user, optionally the handle portion (2a) being made between the suction zone (4) and the blowing end (5), in particular the handle portion (2a) being made near or at the suction zone (4).

In a 38th-ter aspect in accordance with the preceding aspect, the handle portion (2a) is provided with a drive control (2b), optionally a double drive control for safely starting the flow generator device by the user using both hands.

In a 38th-quater aspect in accordance with any one of the two preceding aspects, the handle portion (2a) is provided with a control command (2c) of the intensity of the air flow produced by the air flow generator device (6).

In a 38th-quinquies aspect in accordance with any one of the preceding aspects, the portable blower (1) has an electrical power supply, optionally the flow generator device is electrically powered by means of at least one battery, in particular rechargeable, even more in particular the at least one battery being housable in a seat (2d) provided with corresponding electrical contacts and/or conductors made and/or obtained in a rear appendage (2e) of the structure (2) of the portable blower (1).

In a 38th-sexies aspect in accordance with any one of the preceding aspects, the portable blower (1) has, along the conduit (3) of the structure (2), downstream of the flow generator device, at least one protection grille arranged to create a physical barrier between the flow generator device and the blowing opening (10) of the structure (2) of the portable blower (1), the protection grille avoiding reaching the flow generator device along the conduit (3) of the structure (2) through the blowing opening (10).

In a 39th aspect in accordance with the aspect 1st-bis, the scraping accessory (6) is externally engaged to the body of the blowing accessory (7).

In a 40th aspect in accordance with the 1st-bis aspect or the preceding aspect, the scraping accessory (6) is externally engaged to the body of the blowing accessory (7) at the blowing portion (9) of the latter.

In a 41st aspect in accordance with the aspect 1st-bis or any one of the two preceding aspects, the scraping accessory (6) is externally engaged to the body of the blowing accessory (7) near the blowing opening (10).

In a 42nd aspect in accordance with the aspect 1st-bis or any one of the three preceding aspects, the scraping accessory (6) has at least one scraping edge (6a) arranged according to a protruding and/or advanced position with respect to the blowing portion (9) of the blowing accessory (7) along a longitudinal extension axis (X) of the structure (2) and/or of the conduit (3) of the portable blower (1) in the advancement direction of the air flow generated by the flow generator device from the suction zones (4) to the blowing end (5) when the blowing accessory is mounted on the portable blower (1).

In a 43rd aspect in accordance with the aspect 1st-bis or any of the four preceding aspects, the scraping accessory (6) has at least one scraping edge (6a) arranged according to a protruding and/or advanced position with respect to the blowing opening (10) of the blowing accessory (10) along a longitudinal extension axis (X) of the structure (2) and/or of the conduit (3) of the portable blower (1) in the advancement direction of the air flow generated by the flow generator device from the suction zone (4) to the blowing end (5), when the blowing accessory (7) is mounted on the portable blower (1).

In a 44th aspect in accordance with any one of the two preceding aspects, the scraping edge (6a) of the scraping accessory (6) extends transversely with respect to the longitudinal extension axis (X) of the structure (2) and/or of the conduit (3) of the latter when the blowing accessory (7) is mounted on the structure (2) of the portable blower (1).

In a 45th aspect in accordance with any one of the three preceding aspects, the scraping edge (6a) of the scraping accessory (6) extends substantially perpendicularly with respect to the longitudinal extension axis (X) of the structure (2) and/or of the conduit (3) of the latter when the blowing accessory (7) is mounted on the structure (2) of the portable blower (1).

In a 46th aspect in accordance with any one of the four preceding aspects, the scraping edge (6a) of the scraping accessory (6) is defined on at least one scraping plate (11) externally engaged to the body of the blowing accessory (7).

In a 47th aspect in accordance with the preceding aspect, the scraping plate (11) defining the scraping edge (6a) of the scraping accessory (6) lies according to a position which is spaced with respect to the body of the blowing accessory (7).

In a 48th aspect in accordance with any one of the two preceding aspects, the scraping plate (11) defining the scraping edge (6a) of the scraping accessory (6) and the blowing accessory (7) define at least one intermediate space (12) for the passage of one or more scraped bodies from a surface of the work or use area of the portable blower (1).

In a 49th aspect in accordance with any one of the three preceding aspects, the scraping plate (11) defining the scraping edge (6a) of the scraping accessory (6) has at least one working portion (11a) extending according to an inclined plane with respect to a reference plane perpendicular to the longitudinal extension axis (X) of the structure (2) and/or of the conduit (3) of the latter when the blowing accessory (7) is mounted on the structure (2) of the portable blower (1), the scraping edge (6a) being defined on the edge of the working portion (11a) of the scraping plate (11) farthest from the body of the blowing accessory (7) or from the blowing opening (10) of the latter.

In a 50th aspect in accordance with the preceding aspect, the scraping plate (11) defining the scraping edge (6a) of the scraping accessory (6) has a collection and/or unloading portion (11b) extending from the working portion (11a), on the opposite side with respect to the scraping edge (6a), according to a transverse or inclined extension plane.

In a 51st aspect in accordance with any one of the two preceding aspects, the scraping plate (11) defining the scraping edge (6a) of the scraping accessory (6) has at least one groove (11c) for collecting and/or unloading the scraped bodies from the surface of the work and/or use area of the portable blower (1).

In a 52nd aspect in accordance with any one of the three preceding aspects, the scraping plate (11) defining the scraping edge (6a) of the scraping accessory (6) has a plurality of grooves (11c) for collecting and/or unloading the scraped bodies from the surface of the work and/or use area of the portable blower (1).

In a 53rd aspect in accordance with the preceding aspect, the grooves (11c) for collecting and/or unloading the scraped bodies from the surface of the work and/or use area of the portable blower (1) extend substantially parallel to each other.

In a 54th aspect in accordance with any one of the two preceding aspects, the grooves (11c) for collecting and/or unloading the bodies scraped from the surface of the work and/or use area of the portable blower (1) extend substantially parallel to the longitudinal extension axis (X) of the structure (2) and/or of the conduit (3) of the latter when the blowing accessory (7) is mounted on the structure (2) of the portable blower (1).

In an 55th aspect in accordance with any one of the four preceding aspects, the grooves (11c) of the plurality of grooves (11c) for the collecting and/or unloading the scraped bodies from the surface of the work and/or use area of the portable blower (1) are obtained and/or made at least on the working portion (11a) of the scraping plate (11).

In a 56th aspect in accordance with any one of the preceding aspects, the scraping accessory (6) has at least one supporting and connecting element (13) to the body of the blowing accessory (7).

In a 57th aspect in accordance with the preceding aspect, the supporting and connecting element (13) extends transversely with respect to the body of the blowing accessory (7).

In a 58th aspect in accordance with any one of the two preceding aspects when dependent on any one of the aspects from the 46th to the 55th, the supporting element (13) extends transversely to the scraping plate (11) of the scraping accessory (6).

In a 59th aspect in accordance with any one of the three preceding aspects when dependent on any one of the aspects from the 46th to the 55th, the support element (13) is joined in a single piece with the scraping plate (11) of the scraping accessory (6).

In a 60th aspect in accordance with any one of the four preceding aspects, when dependent on any one of the aspects from the 50th to the 55th, the supporting element (13) is joined in a single piece with the collection and/or unloading portion (11b) of the scraping plate (11) of the scraping accessory (6).

In a 61st aspect in accordance with the aspect 1-bis or any one of the aspects from the 1st to the 55th, the scraping accessory (6) has at least two supporting and connecting elements (13) engaged to the body of the blowing accessory (7) of the portable blower (1).

In a 62nd aspect in accordance with the preceding aspect, each supporting element (13) extends transversely with respect to the body of the blowing accessory (7).

In a 63rd aspect in accordance with any one of the two preceding aspects when dependent on any one of the aspects from the 46th to the 55th, each supporting element (13) extends transversely with respect to the scraping plate (11) of the scraping accessory (6) of the blowing accessory (7).

In a 64th aspect in accordance with any one of the three preceding aspects when dependent on any one of the aspects from the 46th to the 55th, each supporting element (13) is joined in a single piece with the scraping plate (11) of the scraping accessory (6) of the blowing accessory (7).

In a 65th aspect in accordance with any one of the four preceding aspects when dependent on any one of the aspects from the 46th to the 55th, the scraping plate (11) of the scraping accessory (6) of the blowing accessory (7) is interposed between the supporting elements (13) of said scraping accessory (6).

In a 66th aspect in accordance with any one of the five preceding aspects when dependent on any one of the aspects from the 50th to the 55th, each supporting element (13) is joined in a single piece with the collection and/or unloading portion (11b) of the scraping plate (11) of the scraping accessory (6) of the blowing accessory (7).

In a 67th aspect in accordance with any one of the six preceding aspects when dependent on any one of the aspects from the 50th to the 55th, the collection and/or unloading portion (11b) of the scraping plate (11) of the scraping accessory (6) of the blowing accessory (7) is interposed between the supporting elements (13) of said scraping accessory (6).

In a 68th aspect in accordance with the aspect 1st-bis or any one of the aspects from the 39th to the 67th, the scraping accessory (6) of the blowing accessory (7) is removably engaged to the body (2) of the latter.

In a 69th aspect in accordance with any one of the preceding aspects, from the 39th to the 68th, the scraping accessory (6) comprises a first and a second supporting and connecting element (13) emerging away from opposite parts of a wall defining the blowing opening (10) and joined to the scraping plate (11) at opposite ends thereof so as to define a substantially "U"-shaped transverse section of the accessory.

In a 69th-bis aspect in accordance with the preceding aspect, a portion of the wall defining the blowing opening (10) is comprised between the first and the second supporting and connecting element (13) facing and spaced from the scraping plate (11), defining an intermediate space (12) acting as a passage channel for the scraped bodies, in particular the scraping plate (11) being substantially flat with a front tapered attachment edge and/or the portion of the wall defining the blowing opening (10) being curved, and more in particular extending according to an arc of circumference.

In a 69th-ter aspect in accordance with the preceding aspect, the intermediate space (12) is open frontally and preferably also posteriorly.

In a 69th-quater aspect in accordance with any one of the preceding aspects 69 - 69-ter, the first and second supporting and connecting elements (13) are substantially converging towards each other to define a reduced lateral overall dimension or substantially equal to the lateral overall dimension of the blowing opening (10).

In a 70th aspect in accordance with any one of the five preceding aspects, the scraping accessory (6) of the blowing accessory (7) removably engages the body (2) of the latter by means of at least one coupling and uncoupling member, optionally by means of a bushing or a shank fittable on the body of the blowing accessory (7), in particular on the blowing portion (9) of the body of the blowing accessory (7).

In a 71st aspect in accordance with any one of the aspects from the 56th to the 60th, the supporting and connecting element (13) is joined in a single piece with the body of the blowing accessory (7).

In a 72nd aspect in accordance with any one of the aspects from the 61st to the 67th, each supporting and connecting element (13) is joined in a single piece with the body of the blowing accessory (7).

In a 73rd aspect in accordance with the aspect 1-bis or any one of the aspects from the 39th to the 72nd, the scraping edge (6a) of the scraping accessory (6) of the blowing accessory (7) is made of a material resistant to wear from dragging and/or friction, optionally made of Polyamide (PA) or Polyoxymethylene (POM), in particular reinforced with glass fibres.

In a 74th aspect in accordance with the aspect 1-bis or any one of the aspects from the 39th to the 73rd, the scraping edge (6a) of the scraping accessory (6) of the blowing accessory (7) is removable to be replaced with a scraping edge (6a) of different shape and/or material or with a new scraping edge (6a) of the same shape and/or same material.

In a 75th aspect in accordance with any one of the preceding aspects when dependent on the aspects from the 49th to the 74th, the working portion (11a) of the scraping plate (11) of the scraping accessory (6) is removable to be replaced with a working portion (11a) of different shape and/or material or with a new working portion (11a) of the same shape and/or material.

Further features and advantages will become more apparent from the detailed description of a preferred, but not exclusive, embodiment of a portable blower, a corresponding blowing accessory and the use of a scraping accessory in combination with a structure of a portable blower and/or in combination with a blowing accessory for a portable blower, in accordance with the above-listed aspects, the following claims and the attached figures.

### Brief description and drawings

A detailed description of one or more preferred embodiments of the invention is given below by way of non-limiting example, in which:
- figure 1 is a perspective view of a portable blower;
- figure 2 is a perspective view of a blowing accessory applicable to the portable blower of figure 1 or to any other portable blower arranged to engagingly receive the blowing accessory in accordance with the present invention;
- figure 3 is an enlarged perspective view of a detail of the portable blower of figure 1 and the blowing accessory of figure 2;
- figure 4 is an enlarged front view of the detail of figure 3;
- figure 5 is a longitudinal section of the detail of figures 3 and 4, taken along the line V-V of figure 4.

### Detailed description

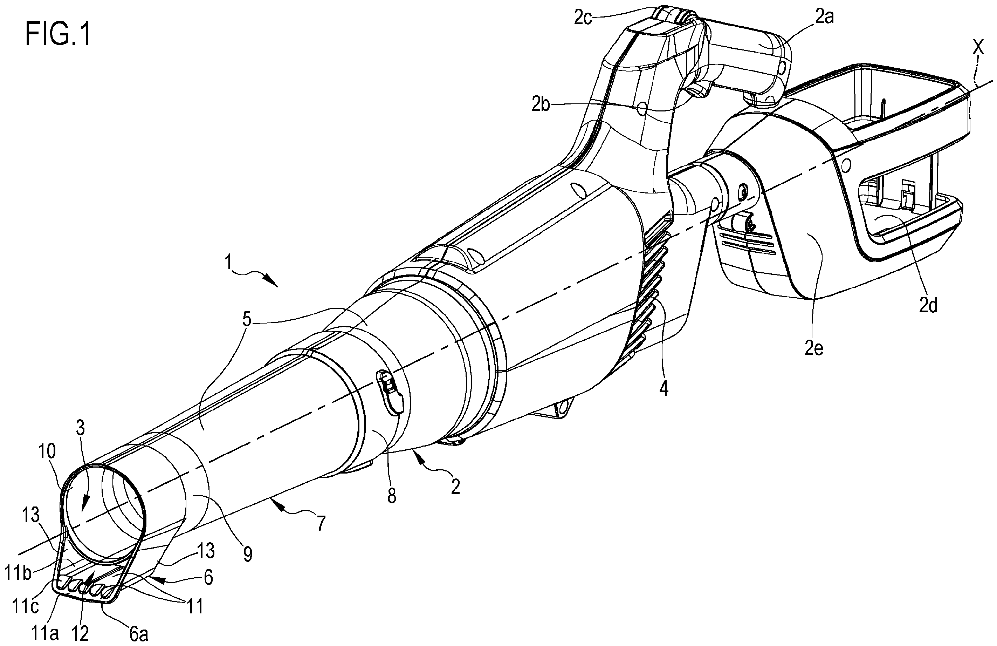

With reference to figure 1, a portable blower 1 is illustrated which is intended for maintenance operations, and/or cleaning outdoor areas, such as roads, gardens, parks and/or the like. In particular, the portable blower 1 is used for the removal, by means of air blowing, of leaves, small debris, garbage and any other small body, object or item, present and bulky on the ground, soil or road to be cleaned.

In detail, the portable blower 1 comprises a structure 2, at least partially hollow, defining at least one conduit 3 intended for the transit of an air flow between a suction zone 4 and a blowing end 5. The portable blower 1 further comprises a flow generator device (not visible in the figures as it is housed inside the structure 2), such as one or more air movement fans, controlled by a corresponding motor (also not visible as it is housed inside the structure 2). The flow generator is switchable between a non-operating condition, in which no air flow is generated along the conduit 3 of the structure 2 and an operating condition, in which at least one air flow is generated along the conduit 3 between the suction zone 4 and the blowing end 5, to exit through a corresponding blowing opening 10.

The portable blower 1 also comprises at least one handle portion 2a arranged on the structure 2 for manual engagement by a user. The handle portion 2a is made between the suction zone 4 and the blowing end 5, in particular near or at the suction zone 4, so as to facilitate the use of the portable blower 1 even by non-expert users who use the portable blower 1 solely for domestic purposes.

The handle portion 2a is provided with at least one drive control 2b for starting the flow generator device. In order to ensure high safety levels during the use of the portable blower 1, the handle 2a can be provided with a double drive control for safely starting the air flow generator which must use both hands to operate the portable blower 1.

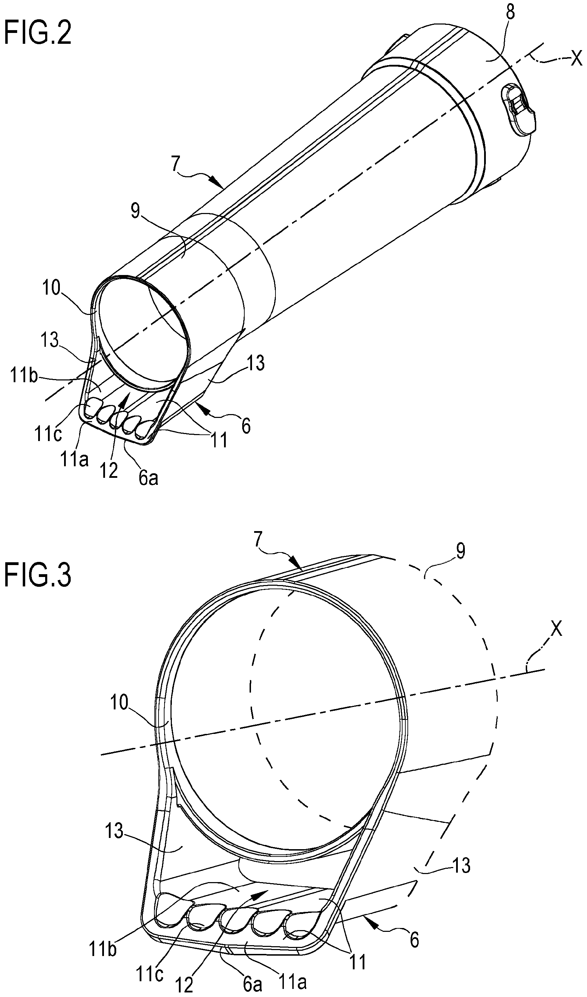

In addition, as visible in figures 1 and 2, the handle 2a can further be provided with a power variator or a control device 2c, optionally with a wheel or roller, which allows the adjustment of the number of revolutions of the rotating components of the flow generator device 6 and consequently of the intensity or speed of the output/blowing air flow.

The portable blower 1 further has an electrical power supply, preferably battery-powered, in particular rechargeable. The battery (not illustrated in the attached figures) can be housed in a special seat 2d provided with suitable contacts and electrical conductors which is obtained at a rear appendage 2e of the structure 2 of the portable blower 1.

The portable blower 1 also comprises, along the conduit 3 of the structure 2, downstream of the air flow generator device, at least one protection grille (not visible in the attached figures) with the purpose of creating a physical barrier between the air flow generator device and the blowing opening 10 of the structure 2 of the portable blower 1. The protection grille prevents reaching the air flow generator device along the conduit 3 of the structure 2 through the blowing opening 10, so as to protect anyone from coming into contact with moving and hot parts of the portable blower 1 which can cause physical damage or injury.

It is also possible to envisage that the portable blower 1 is capable of producing suction at the blowing opening 10, transforming the latter into a blowing and suction opening 10. In this case, in the operating condition of the flow generator device, the portable blower 1 can be commanded to change the direction of the air flow produced inside the conduit 3, passing from a blowing flow directed from the suction zone 4 to the blowing opening 10 to a suction flow through such an opening 10 and vice versa.

The portable blower 1 can further comprise and mount several blowing accessories 7, each one hollow or tubular. Once mounted on the portable blower 1, such blowing accessories 7 give continuity to the conduit 3 to direct the air flow generated by the air flow generator outwards according to a predetermined main output air flow.

With reference to the embodiment solution illustrated in figures 1 and 2, the blowing accessory 7 comprises a traditional tubular structure having an engagement portion 8 arranged to engage the structure 2 of the portable blower 1 to put the accessory 7 in fluid communication with the conduit 3 of the structure 2 and a blowing portion 9 which ends, on the side opposite the engagement portion 8, with the aforementioned blowing opening 10.

In accordance with the embodiment solution illustrated in figures 1 to 4, the blowing opening 10 has a substantially circular shape/profile. However, it is not excluded that the blowing opening 10 can have a shape/profile different from the circular shape/profile or that the portable blower 1 is provided with different blowing accessories 7 which each have a blowing opening with a particular shape/profile and different from the circular shape/profile.

Furthermore, it is also possible to envisage that the portable blower 1 is not provided with any blowing accessory 7 and its structure 2 has a tubular structure which ends at the blowing end 5 with the blowing opening 10.

Advantageously, the portable blower 1 comprises a scraping accessory 6 engaged to the structure 2, in particular to the blowing accessory 7. The scraping accessory 6 is configured to come into contact with one or more bodies present on a surface of a work or use area of the portable blower 1 to move or detach such bodies from the surface and allow, in the operating condition of the flow generator device of the portable blower 1, to blow and push such bodies along the relative surface. In other words, the scraping accessory 6 is configured so as to allow the portable blower 1 to scratch, remove and detach mechanically from soil, from the ground and from roads, the agglomerates of leaves, debris, garbage and the like which over time have formed and firmly bonded due to particular conditions, such as humidity, rain, mud or any other substance or aggregating and adhesive element.

As visible in the attached figures, the scraping accessory 6 can be externally engaged to the structure 2 of the portable blower 1 or to the body of the blowing accessory 7.

If the portable blower 1 is provided with a structure 2 with tubular extension without any blowing accessory 7, the scraping accessory 6 is externally engaged to the structure 2 at the blowing end 5 of the latter.

On the contrary, the scraping accessory 6 is externally engaged to the body of the blowing accessory 7 at the blowing portion 9 of the latter.

Regardless of the configuration of the portable blower 1, the scraping accessory 6 is externally engaged to the structure 2 of the portable blower 1 or of the body of the blowing accessory 7 near the blowing opening 10 so as to allow an active collaboration between the scraping accessory 6 and the main output air flow when the flow generator is in the operating condition, producing a synergistic effect to move, detach and blow the agglomerates firmly bonded to the surface to be cleaned of the work and/or use area of the portable blower 1.

Entering into the structural detail of the scraping accessory 6, with the visual aid of the attached figures, such an accessory has at least one scraping edge 6a arranged according to a protruding and/or advanced position with respect to the blowing opening 10, i.e., with respect to the blowing end 5 of the structure 2 and/or with respect to the blowing portion 9 of the blowing accessory 7, along a longitudinal extension axis X of the structure 2 and/or the conduit 3 in the advancement direction of the air flow generated by the flow generator device from the suction zone 4 to the blowing end 5 and the blowing opening 10.

As visible in figures 1 to 4, the scraping edge 6a of the scraping accessory 6 extends substantially perpendicularly transversely with respect to the longitudinal extension axis X of the structure 2 and/or of the conduit 3 of the latter and/or with respect to the longitudinal extension of the blowing accessory 7. However, it should be noted that any other transverse extension different from the perpendicular extension can be envisaged and, depending on the situations and contingent needs, it can be preferred as it is effective and efficient for the removal of the firmly bonded agglomerates.

Always with reference to the attached figures, the scraping edge 6a of the scraping accessory 6 is defined on at least one scraping plate 11 lying in a spaced position with respect to the structure 2 of the portable blower 1 or with respect to the body of the blowing accessory 7. The scraping plate 11 and the structure 2 of the portable blower 1 or the body of the accessory 7 define at least one intermediate space 12 for the possible passage of one or more bodies or agglomerates which are scraped from the surface of the work or use area of the portable blower 1.

The scraping plate 11 has a complex shape in which it is possible to identify a working portion 11a extending according to an inclined plane with respect to a reference plane perpendicular to the longitudinal extension axis X of the structure 2 and/or of the conduit 3 and/or to the longitudinal extension of the body of the blowing accessory 7 defining the scraping edge 6a according to the position farthest from the blowing opening 10 and a collection and/or unloading portion 11b extending transversely or according to an inclined plane from the working portion 11a, on the opposite side with respect to the scraping edge 6a.

According to an advantageous aspect of the scraping accessory 6, the scraping plate 11 has at least one groove 11c, optionally a plurality of grooves 11c substantially parallel to each other and to the longitudinal extension axis X of the structure 2 and/or of the conduit 3 of the latter and/or to the longitudinal extension of the blowing accessory 7 for the collecting and/or unloading the scraped bodies from the surface of the work and/or use area of the portable blower 1. The grooves 11c for collecting and/or unloading help the scraped bodies and/or agglomerates to channel towards the intermediate space 12, allowing the advancement of the scraped material, which gives space to the material being scraped or to be scraped.

As visible in figures 1 to 4, the grooves 11c for collection and/or unloading are obtained and/or made at least on the working portion 11a of the scraping plate 11. If necessary, the grooves 11c for collection and/or unloading can also be obtained and/or made on the collection and/or unloading portion 11b.

Furthermore, it is also possible to provide grooves 11c for collection and/or unloading which have an inclined extension with respect to the longitudinal extension axis X of the structure 2 and/or of the conduit 3 of the portable blower 1 and/or to the longitudinal extension of the blowing accessory 7, as it is possible to envisage that the grooves 11c for collection and/or unloading have different and non-parallel extensions with each other.

In order to support the scraping accessory 6 in the ideal position to allow the best effectiveness in relation to the scraping operations and connect, at the same time, the latter to the structure 2 of the portable blower 1 or to the body of the blowing accessory 7, the scraping accessory 6 has at least one supporting and connecting element 13, optionally two, extending transversely to the structure 2 of the portable blower 1 or to the body of the blowing accessory 7 and extending transversely with respect to the scraping plate 11 of the scraping accessory 6.

The supporting and connecting elements 13 engage the scraping plate 11 of the scraping accessory 6 at the collection and/or unloading portion 11b so that the collection and/or unloading portion 11b is interposed between the supporting and connecting elements 13.

Going into even further detail, the scraping accessory 6 comprises a first and a second supporting and connecting element 13 emerging away from opposite parts of a wall of the structure 2 of the portable blower 1 or of the body of the blowing accessory 7 defining the blowing opening 10 and are joined to the collection and/or unloading portion 11b of the scraping plate 11 at opposite ends thereof so as to define a substantially "U"-shaped transverse section of the scraping accessory 6.

As visible in figures 1 to 4, the blowing opening 10 is comprised between the first and the second supporting and connecting element 13 and the wall portion defining it is interposed between the first and the second supporting and connecting element 13 and faces, according to a spaced position, the scraping plate 11 where the intermediate space 12 is defined. The scraping plate 11 is substantially flat with a tapered front attachment edge, while the wall portion defining the blowing opening 10 interposed between the first and the second supporting and connecting elements 13 is curved, optionally according to an arc of circumference extension.

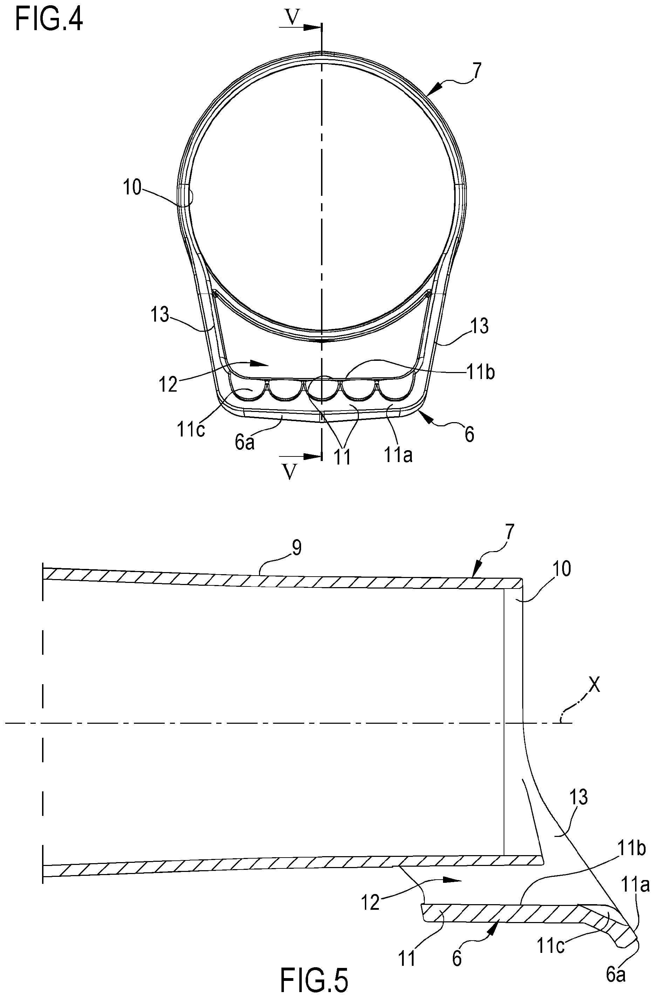

As is clearly visible in the attached figures and, in particular, in the section of figure 5, the intermediate space 12 defining a passage channel for the scraped bodies and/or agglomerates is frontally and posteriorly open so as to allow both a long advancement in the channel and an unloading thereof at the rear side.

As visible in figure 4, the first and the second supporting and connecting element 13 are substantially converging towards each other to define a reduced lateral overall dimension or substantially equal to the lateral overall dimension of the blowing opening 10 of the portable blower 1 or of the blowing accessory 7.

In accordance with a feasible embodiment solution, the scraping accessory 6 is removably engaged to the structure 2 of the portable blower 1 or to the body of the blowing accessory 7. In this case, the scraping accessory 6 of the portable blower 1 removably engages the structure 2 of the latter or the body of the blowing accessory 7 by means of at least one coupling and uncoupling member. Optionally, the coupling and uncoupling member can comprise a bushing or a shank (not illustrated) which can fit on the structure 2 of the portable blower 1 along the longitudinal extension axis X of the structure 2 and/or of the conduit 3, in particular on the blowing end 5 of the structure 2 of the portable blower 1 or on the body of the blowing accessory 7, in particular at the blowing portion 9 of the latter. Of course, any other coupling and uncoupling member can be provided for the removable solution of the scraping accessory 6.

In accordance with a further embodiment solution which is alternative to the removable engagement of the scraping accessory 6 to the structure 2 of the portable blower 1 or to the body of the blowing accessory 7, it is possible to envisage that the scraping accessory 6 is joined in a single piece to the structure 2 of the portable blower 1 or to the body of the blowing accessory 7 by moulding or co-moulding. In this case, each supporting and connecting element 13 is joined in a single piece with the structure 2 of the portable blower 1 or the body of the blowing accessory 7. Furthermore, each supporting and connecting element 13 is also joined in a single piece to the scraping plate 11 of the scraping accessory 6, at the collection and/or unloading portion 11b of the latter, so that the scraping plate 11, the supporting and connecting elements 13 and the structure 2 of the portable blower 1 or the body of the blowing accessory 7 constitute a single monoblock.

In accordance with a further embodiment solution of the present invention, the scraping edge 6a of the scraping accessory 6 of the portable blower 1 and/or the scraping plate 11 or its working portion 11a are made of a material resistant to wear from dragging and/or friction, optionally in Polyamide (PA) or Polyoxymethylene (POM), in particular reinforced with glass fibres.

It is also possible to envisage that the scraping edge 6a and/or the scraping plate 11 or its working portion 11a are made of a metal material, highly resistant to wear and/or deterioration due to dragging and scraping actions.

According to another embodiment solution of the present invention, the scraping edge 6a of the scraping accessory 6 of the portable blower 1 and/or the scraping plate 11 or its working portion 11a are removable to be replaced with a component which is different in shape and/or material or with a new component of the same shape and/or same material.

### Advantages

The present invention allows to solve the problems found in the prior art and to obtain the following advantages.

Firstly, the scraping accessory allows to mechanically remove, from the surface of the work and/or use area of the portable blower, the bodies and/or agglomerates of leaves, debris, garbage and the like which over time have accumulated and bonded, creating non-removable heaps, simply using the air flow produced by the blower. Once mechanically removed, the bodies and/or agglomerates can easily be pushed and blown forward by the air flow produced by the portable blower.

It should also be considered that the removability of the scraping edge and/or of the scraping plate or of its working portion allows the scraping accessory to also change its configuration in terms of material used or shape, allowing it to be adapted, in the best possible way, to the situation and or to contingent needs.

Last but not least, the structure of the scraping accessory lends itself to providing different supporting and connecting areas, as well as attachment points for further accessories to be mounted and used on or together with the portable blower, such as a trolley provided with support and/or sliding wheels or a light emitter, preferably LED or the like.

## Claims

1. Portable blower (1) comprising:
- a structure (2), at least partially hollow, defining at least one conduit (3) for the transit of an air flow between a suction zone (4) and a blowing end (5) at which at least one blowing opening (10) is provided;
- a flow generator device operatively arranged inside the structure (2) and switchable between a non-operating condition, in which no airflow is generated along the conduit (3) of the structure (2) and an operating condition, in which an air flow is generated along the conduit (3) between the suction zone (4) and the blowing end (5), towards the blowing opening (10);
- a scraping accessory (6) engaged with the structure (2) and configured to come into contact with one or more bodies present on a surface of a work or use area of the portable blower (1) to move or detach such bodies from the surface and allow, in the operating condition of the flow generator device of the portable blower (1), the air flow generated thereby, to blow and push such bodies along the relative surface.

2. Portable blower (1) according to the preceding claim, wherein it comprises a blowing accessory (7) having an at least partially hollow body, the blowing accessory (7) the blowing accessory (7) comprising:
- an engagement portion (8) engageable to the blowing end (5) of the structure (2) to put the blowing accessory (7) in fluid communication with the conduit (3) of the structure (2), the blowing accessory (7) forming part of the structure (2) of the portable blower (1) and giving continuity to the conduit (3) of the latter;
- a blowing portion (9), arranged on the side opposite the engagement portion (8), in fluid communication with the latter and defining the blowing opening (10) of the portable blower (1) for the output of an air flow generated by the flow generator device,
the scraping accessory (6) being engaged to the body of the blowing accessory (7) to come into contact with one or more bodies present on a surface of a work or use area of the portable blower (1) to move or detach such bodies from the surface and allow, in the operating condition of the flow generator device of the portable blower (1), the output air flow (F1), to push such bodies on the surface by blowing.

3. Portable blower (1) according to any one of the preceding claims, wherein the scraping accessory (6) has at least one scraping edge (6a) arranged according to a protruding and/or advanced position with respect to the blowing end (5) of the structure (2) of the portable blower (1), optionally with respect to the blowing opening (10), along a longitudinal extension axis (X) of the structure (2) and/or of the conduit (3) in the advancement direction of the air flow generated by the flow generator device from the suction zone (4) to the blowing end (5), optionally the scraping edge (6a) of the scraping accessory (6) extending transversely, in particular substantially perpendicularly, with respect to the longitudinal extension axis (X) of the structure (2) and/or of the conduit (3) of the latter.

4. Portable blower (1) according to the preceding claim, wherein the scraping edge (6a) of the scraping accessory (6) is defined on at least one scraping plate (11) engaged outside the structure (2) of the portable blower (1), optionally the scraping plate (11) of the scraping accessory (6) lying in a spaced position with respect to the structure (2) of the portable blower (1), in particular the scraping plate (11) of the scraping accessory (6) and the structure (2) of the portable blower (1) defining at least one intermediate space (12), optionally open anteriorly and preferably also posteriorly, for the passage of one or more scraped bodies from a surface of the work or use area of the portable blower (1).

5. Portable blower (1) according to the preceding claim, wherein the scraping plate (11) has at least one working portion (11a) extending according to an inclined plane with respect to a reference plane perpendicular to the longitudinal extension axis (X) of the structure (2) and/or of the conduit (3) of the portable blower (1), the scraping edge (6a) being defined on the edge of the working portion (11a) of the scraping plate (11) farthest from the structure (2) of the portable blower (1) or from the blowing opening (10) of the latter, optionally the scraping plate (11) also having a collection and/or unloading portion (11b) extending from the working portion (11a), on the opposite side with respect to the scraping edge (6a), according to a transversal or inclined extension plane, in particular the scraping plate (11) of the scraping accessory (6) having at least one groove (11c), optionally a plurality of grooves (11c), for collecting and/or unloading the scraped bodies from the surface of the work and/or use area of the portable blower (1), even more in particular the grooves (11c) for collecting and/or unloading extending substantially parallel to each other, in detail the grooves (11c) for collecting and/or unloading extending substantially parallel to the longitudinal extension axis (X) of the structure (2) and/or of the conduit (3) of the latter.

6. Portable blower (1) according to any one of the preceding claims, wherein the scraping accessory (6) has at least one supporting and connecting element (13) to the structure (2) of the portable blower (1), optionally at least two supporting and connecting elements (13) to the structure (2) of the portable blower (1), in particular each supporting and connecting element (13) extending transversely with respect to the structure (2) of the blower (1).

7. Portable blower (1) according to claim 6 when dependent on claim 5, each supporting and connecting element (13) extends transversely with respect to the scraping plate (11) of the structure (2) of the portable blower (1), optionally extending transversely with respect to the collection and/or unloading portion (11b) of the scraping plate (6), in particular the scraping plate (11) of the scraping accessory (6) being interposed between the supporting and connecting elements (13) of said scraping accessory (6).

8. Portable blower (1) according to any one of the two preceding claims, wherein the scraping accessory (6) comprises a first and a second supporting and connecting element (13) emerging away from opposite sides of a wall defining the blowing opening (10) and joined to the scraping plate (11), optionally to the collection and/or unloading portion of the latter, at opposite ends thereof so as to define a substantially "U"-shaped transverse section of the accessory, in particular the first and the second supporting and connecting element (13) are appreciably convergent towards each other to define a lateral overall dimension which is reduced or substantially equal to the lateral overall dimension of the blowing opening (10).

9. Portable blower (1) according to the preceding claim, wherein a portion of the wall defining the blowing opening (10) is comprised between the first and the second supporting and connecting element (13) and is facing and spaced from the scraping plate (11), optionally from the collection and/or unloading portion (11b) of the latter, defining the intermediate space (12) acting as a passage channel for the bodies scraped from the surface of the work and/or use area of the portable blower (1), in particular the scraping plate (11) being substantially flat with a front tapered attachment edge and/or the portion of the wall interposed between the first and the second supporting and connecting element (13) defining the blowing opening (10) being curved, and more in particular extending according to an arc of circumference.

10. Portable blower (1) according to any one of the preceding claims, wherein the scraping edge (6a) of the scraper accessory (6) of the portable blower (1) is removable to be replaced with a scraping edge (6a) which is different in shape and/or in material or with a new scraping edge (6a) of the same shape and/or the same material, optionally the working portion (11a) of the scraping plate (11) of the scraping accessory (6) is removable to be replaced with a working portion (11a) which is different in shape and/or in material or with a new working portion (11a) of the same shape and/or the same material.

11. Blowing accessory (7) for portable blowers (1) of the type comprising a structure (2) defining at least one conduit (3) for the transit of an air flow between a suction zone (4) and a corresponding blowing end (5), a flow generator device operatively arranged inside the structure (2) and switchable between a non-operating condition, in which no air flow is generated along the conduit (3) of the structure (2) and an operating condition, in which an air flow is generated along the conduit (3) between the suction zone (4) and the blowing end (5), the blowing accessory (7) comprising a body, at least partly hollow, having:
- an engagement portion (8) engageable to a blowing end (5) of a structure (2) of a portable blower (1) to put the blowing accessory (7) in fluid communication with a conduit (3) of the structure (2) of the portable blower (1) and give continuity to the conduit (3);
- a blowing portion (9), arranged on the side opposite the engagement portion (8), in fluid communication with the latter, the blowing portion (9) defining a blowing opening (10) for the output of an air flow from the conduit (3) of the portable blower (1);
- a scraping accessory (6) engaged to the body of the blowing accessory (7), configured to come into contact with one or more bodies present on a surface of a work or use area of the portable blower (1) to move or detach such bodies from the surface and allow, in the operating condition of the flow generator device of the portable blower (1), the output air flow, to push such bodies on the surface by blowing.
